# EUROPEAN PATENT SPECIFICATION

(11) **EP 3 206 852 B1**
(45) Date of publication and mention of the grant of the patent: **15.08.2018**
(21) Application number: 15784327.7
(22) Date of filing: 16.10.2015
(51) Int. Cl.: B29C 47/10, B29B 17/00, B29C 35/02, B29C 47/88, B29C 47/00, C08J 3/24, B29K 421/00, B29K 407/00, B29K 409/00, B29K 419/00, B29K 101/10

(54) **CONTINUOUS PROCESS FOR THE MANUFACTURE OF A SOLID OBJECT BY EXTRUDING GRANULATED VULCANISED RUBBER WITH A THERMOSET RESIN**
VERFAHREN ZUR HERSTELLUNG EINES OBJEKTS DURCH EXTRUDIEREN EINES GRANULIERTEN VULKANISIERTEN GUMMIS MIT EINEM DUROPLASTHARZ
PROCÉDÉ DE FABRICATION D'UN OBJET PAR EXTRUSION D'UN CAOUTCHOUC VULCANISÉ GRANULÉ AVEC UNE RÉSINE THERMODURCIE

(30) Priority: 17.10.2014 EP 14382402
(43) Date of publication of application: 23.08.2017
(73) Proprietor: Signus Ecovalor, S.L., 28033 Madrid (ES)
(72) Inventor: BERMEJO MUÑOZ, José María, E-28033 Madrid (ES); HERNÁNDEZ RUIZ DE OLANO, Ricardo, E-48270 Markina-Xemein (ES); SÁIZ RODRÍGUEZ, Leticia, E-28033 Madrid (ES); GARITAONANDIA BIDASOLO, Felipe, E-48270 Markina-Xemein (ES); FERNÁNDEZ GARCÍA, Raúl, E-43890 L'Hospitalet de l'Infant (Tarragona) (ES)
(74) Representative: Elzaburu S.L.P.
(86) International application number: PCT/EP2015/074060
(87) International publication number: WO 2016/059234

(56) References cited:
- EP-A1- 0 003 701
- DE-A1- 19 957 175

## Description

### FIELD OF THE INVENTION

The present invention refers to a continuous process for the manufacture of a solid object by extruding granulated vulcanised rubber with a thermoset resin in an extruder.

### BACKGROUND OF THE INVENTION

Granulated vulcanised rubber, such as that proceeding from scrap tyres, has been processed using different techniques during past years to produce different types of pieces made by moulding a granulated vulcanised rubber with a thermoset resin.

Most of these pieces are produced using discontinuous compression moulding methods, whose first step consists in mixing granulated vulcanised rubber with a thermoset resin within an agitation tank.

A batch of said mixture is then introduced in a mould cavity of a forming press, which is usually pre-heated. A top member closes the mould cavity and applies pressure on the mixture so that the mixture adapts to the shape of the mould cavity. Pre-established pressure and temperature conditions within the mould cavity are maintained until the thermoset resin has cross-linked.

Residence time of the mixture within the mould cavity depends on the dimensions of the pieces, as cross-linking of the thermoset resin depends on the applied temperature.

Once the thermoset resin has cross-linked, the top member of the forming press is removed to allow extraction of the piece. Another batch of the mixture may then be introduced into the mould cavity to obtain another batch of pieces. An example of this kind can be found in JP 2005 288704 A.

However, when using this technology, the range of the residence times normally varies from 10 and 20 minutes. It would be desirable a continuous process to reduce production times, which, in turn, would reduce substantially production costs.

A continuous process frequently used as an alternative to compression moulding both in the plastics and non vulcanised rubber industry is extrusion.

In the first case, thermoplastic pellets are introduced through the hopper of the extruder into the barrel wherein they are melted, transported along the barrel, by means, for example, of a screw, and finally forced through a die that provides the desired shape to the profile. Usually heating means are provided on the barrel to melt the thermoplastic pellets. Examples of these can be found in GB 2 059 964 A and GB 2 509 864 A.

In the second case, non-vulcanised rubber is introduced through the hopper of the extruder into the barrel, wherein it is transported by means of, for example, a screw and forced through a die that provides the desired shape of the profile. Subsequently the profile undergoes a vulcanisation process outside of the extruder in other appropriate means. This technique is exemplified in, for example, JP 2002 361713.

However, the extrusion is much more troublesome when it is intended to apply it to granulated vulcanised rubber since, while the extrusion is a process intended for fluids, granulated vulcanised rubber, however, is a solid that does not melt nor plasticize, which involves special problems when extruding. Furthermore, it has to be taken into account the temperature conditions within the extruder because the outcoming piece has to be sufficiently cross-linked to avoid crumbling of the same when exiting the die. In order to achieve this, the presence of an adequate cross-linking agent is required, which must be added to the mixture at the right time, since due to temperature conditions within the extruder, cross-linking of the thermoset resin may occur at an early stage of the extrusion process. In such case, chunks of cross-linked thermoset resin are formed within the extruder which are unable to re-melt since cross-linking of the thermoset resin is a non-reversible process. These chunks block the entrance to the die and impede extrusion of the thermoset resin.

When thermoset resins are extruded in a mixture with a granulated material, such as granulated vulcanised rubber, the problem is aggravated as a result of friction between the grains of the granulated material and parts of the extruder, such as, for example, the barrel and the screw. This further increases the temperature of the mixture and therefore fosters cross-linking to occur at an even earlier stage. As a consequence, when the extruder further comprises a screw within the barrel additional problems arise: if the cross-linking occurs in the immediate surroundings of the screw, small chunks are broken apart whereas bigger chunks can block the screw. In the first situation, the profile crumbles as soon as it exits the die; in the second situation, the screw may be even forced to stop, which may result in breakage of the motor of the screw or of the screw itself.

In the prior art, there exist documents such as US 4,692,352 which describes processes in which formulations which can comprise several types of rubbers are extruded with tackifying agents and other components in an extruder, which have been previously mixed in a Banbury type equipment in order to obtain the formulation of a fluid adhesive which is applied over a backing tape, thus obtaining the final adhesive tape.

Also, US2002/0101004 A1 discloses the extrusion of materials such as natural rubbers, vulcanised rubbers, synthetic rubbers, etc. with lubricants such as oils or volatile solvents. The objective of using such lubricants is replenishing the plasticizers that can be lost in the extrusion process, which results in raw products without being cured nor cross-linked, and so a subsequent processing is required in order to be transformed in finished pieces. On the contrary, in the process described herein, finished pieces which do not require any further processing to be used, other than, the cut to the required measure, are obtained.

DE19957175 A1 discloses a process in which moulded bodies from leftovers of fragmented synthetic materials and polyurethane binder are prepared. In said process, the fragmented synthetic materials, e.g. ground rubber particles, and a cross-linking agent, are mixed in the extruder.
EP 0 003 701 A1 discloses a similar process, wherein these components are mixed subsequently to the extruder and before the die which defines the product shape. Up to now, no process is known wherein vulcanised rubber, such as that proceeding from scrap tyres, can be successfully cross-linked with a thermoset resin, when the final shape has been acquired, in a continuous extruding process obtaining, in only one equipment, substantially finished pieces that do not require any further processing for its subsequent use.

### SUMMARY OF THE INVENTION

An object of the present invention is therefore to provide a process to produce a solid piece or profile by extruding granulated vulcanised rubber with a thermoset resin in a continuous process so as to obtain substantially finished pieces in only one equipment, thus avoiding the problems stated above.

This object has been achieved because the inventors have found that it is possible to successfully extrude a vulcanised rubber such as that proceeding from scrap tyres, with a thermoset resin in an extruder in a continuous process, through the following two main features:
1) while the mixture is moving through the die of the extruder, adding the cross-linking agent to the vulcanised rubber and thermoset resin mixture, at a point of the die where the mixture has acquired the final shape, and in a sufficient amount to start the cross-linking of the mixture; and
2) subsequently, keeping moving the mixture through the die of the extruder and optionally through an extender element of the die, during the time required for the resin to cross-link to a sufficient extent to avoid the crumbling of the resulting solid object when exiting the die and optionally an extender element, and to allow to obtain a substantially finished piece.

Herein, "substantially finished piece" shall mean a piece that, although its cross-linking process has not been fully completed when exiting the die of the extruder or the optional extender element, it has achieved a cross-linking degree high enough to allow it to maintain its shape without crumbling when exiting said die of the extruder or the optional extender element, so that the cross-linking can be completed in environmental conditions without requiring any further processing for its use, and in particular, without requiring any further moulding step, or similar, other than eventually the cut to the required measure according to its intended use.

Therefore, in a first aspect, the invention relates to a process for manufacturing a solid object by extruding a granulated vulcanised rubber with a thermoset resin in an extruder, which comprises a die having at least one orifice practised on a lateral surface thereof, and optionally an extender element of the die, wherein the process comprises the steps of:
- mixing the granulated vulcanised rubber and the thermoset resin to form a mixture and move this mixture towards the die;
- while the mixture is moving through the die, adding a fluid cross-linking agent to the mixture through the at least one orifice practised on a lateral surface of the die, at a point of the die where the mixture has acquired the desired shape and in a sufficient amount to start the cross-linking of the resin within the die, thereby acquiring its final shape; and
- keeping moving the mixture with its final shape through the die during time enough to allow the resulting object to cross-link to a sufficient extent to avoid its crumbling and to allow to obtain a substantially finished piece when exiting the extruder.

In that way, further processes such as post-curing, cooling, moulding our vulcanization ovens are avoided.

Herein, the "object" or "piece" shall mean any kind of solid object obtained by the method herein described, that can have any shape or arrangement, which is defined by the shape of the die. Preferably, the object is a solid three-dimensional piece, commonly referred as "profile" in this technical field. As a result of the indicated process, a substantially finished piece or profile directly at the end of the die of the extruder and optionally the extender element, which does not require any further processing, other than the cut to the required measure, is obtained.

Also, "extender element" is intended to mean an optional element of the extruder placed next to the die, and when present, having the function of moving the mixture through it during time enough to allow the resulting object to cross-link to a sufficient extent to avoid its crumbling when exiting the extender element. In its simplest form, this extender element is simply a hollow tube. Preferably, the extender element is properly polished in order to have the lowest possible resistance, and still more preferably it should be provided with a certain level of conicity, which would improve the movement of the object through the same.

As the fluid cross-linking agent is added into the mixture, just when it has acquired its final shape, through at least one orifice practised on the lateral surface of the die, cross-linking of the thermoset resin will start at the die and not at an earlier stage nor at a latter stage, hence avoiding blockage of the extruder or the crumbling of the object when exiting the same.

Also, due to the fact of moving the mixture through the die and optionally through the extender element for a period of time, the cross-linking of the mixture can proceed within the die and optionally within the extender element to a sufficient extent to avoid the crumbling of the resulting object when exiting the die and optionally the extender element. In other words, the cross-linking of the object do not have to be necessarily complete when exiting the die and optionally the extender element, but rather is enough to have proceeded to such an extent that no crumbling of the object takes place when exiting the die and optionally the extender element, while being possible to finish the cross-linking after exiting the extruder. This means a substantial difference with the processes for the manufacture of pieces known to the date, wherein the cross-linking of the piece is carried out always after the extruding step in a moulding line where the mixture stay until the final shape is acquired and subsequently a release from the mould is required, which forces the process to be carried out in a discontinuous way. In this regard, in the present invention, the skill in the art could easily find the time the mixture has to be kept within the die and optionally within the extender element to achieve the desired objective from temperature data which are required within the die of the extruder for the cross-linking to start successfully. Once defined the residence time of the mixture within the die and optionally the extender element, two main parameters are available to the skill in the art, which can be varied and combined as appropriate: the speed of the mixture (mₗᵢₙₑₐₗ/S) and the lengths of the die and optionally the extender element (m), so as to the higher the speed (mₗᵢₙₑₐₗ/S) the higher the die and optionally the extender element length (m) and viceversa. In this way, when present, the extender element could have in general a length from a few centimetres to one meter and a half or more, which means residence times of the mixture within the extender element from 0 to 10 minutes, and more preferably between 5 and 7 minutes. In preferred embodiments, the length of the extender element is about 50 cm, which involves an average residence time of the mixture within the same of about 5 minutes. At this point, it has also to be taken into account that an increase in the length of the extender element, will normally lead to an increase in the pressure in the equipment due to the increase of the friction along the profile. For this reason, it could optionally be added also a fluidizing agent or release agent, such as for example Getren type or the like, if required or convenient.

In an embodiment, the thermoset resin is a isocyanate and the cross-linking agent is water or glycol, more preferably water. In the latter case, water can be added to the mixture in liquid form, which quickly is converted into steam due to the die's temperature or in steam form. In that way, the spreading of the agent through the spaces between the rubber particles is promoted.

In other embodiment of the invention, the granulated vulcanised rubber and the thermoset resin are mixed outside of the extruder to form a mixture. Then, the mixture is introduced in the barrel through the feed throat and then is forced through the die
In another embodiment, the granulated vulcanised rubber and the thermoset resin are introduced in the barrel through the feed throat and then are mixed within the barrel by mixing means to form the mixture.

In yet another embodiment, the extruder comprises a screw within the barrel. The screw mixes the granulated vulcanised rubber and the thermoset resin to form the mixture and advances the mixture from within the barrel towards the die. In other words, the mixing means correspond to the screw. On the other hand in the experimental tests below, a single screw extruder has been used, but the inventors consider that it could be equally applicable to double screw extruders. For this reason, it is considered that the present invention encompasses and is applicable to all types of extruders.

In yet a further embodiment, the mixture is heated within the die by heating means. Heating the mixture fosters cross-linking of the thermoset resin when the cross-linking agent is present, so production times are reduced.

Thanks to the described process, it is possible to manufacture substantially finished pieces in only one step by extruding a vulcanised rubber, such as that proceeding from scrap tyres, with a thermoset resin in a continuous process, which involves a significant shortening of the processing time of the piece in relation to the non continuous methods known in the art.

### DESCRIPTION OF THE DRAWINGS

Figure 1 shows a longitudinal sectional drawing of a single screw extruder employed in an embodiment of the invention.
Figure 2 shows a longitudinal sectional drawing of a die employed in an embodiment of the invention.

### DETAILED DESCRIPTION OF THE INVENTION

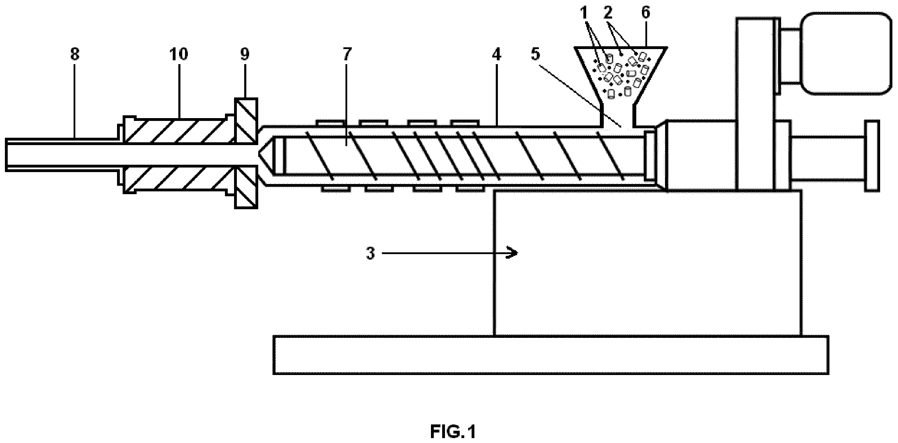

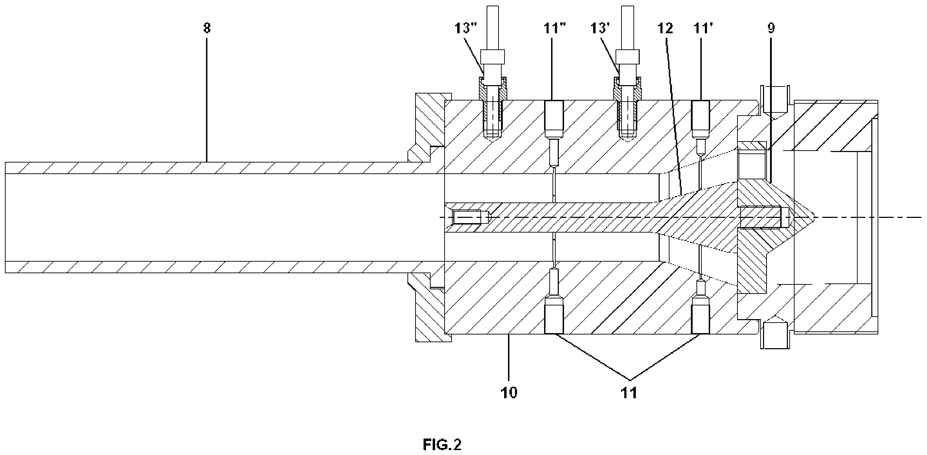

An embodiment of the present invention for a process for manufacturing a piece by extruding a granulated vulcanised rubber with a thermoset resin 2 in an extruder 3 will be described hereinafter with reference to figures 1 and 2.

The extruder 3 depicted in figure 1 is a single screw extruder comprising a barrel 4, a screw 7 and a die 10. The barrel 4 has a feed throat 5 through which a granulated vulcanised rubber 1 and the thermoset resin 2 are introduced.

Optionally, the extruder 3 comprises a hopper 6 to assist the introduction of the granulated vulcanised rubber 1 and the thermoset resin 2 in the barrel 4 through the feed throat 5.

Once the granulated vulcanised rubber 1 and the thermoset resin 2 have been introduced in the barrel 4, the screw 7 mixes the granulated vulcanised rubber 1 and the thermoset resin 2 to form a mixture.

In another embodiment, the granulated vulcanised rubber 1 and the thermoset resin 2 are mixed outside of the extruder 3 to form the mixture, which in turn is introduced in the barrel 4 through the feed throat 5.

The screw 7 advances the mixture, formed within the barrel 4 of the extruder 3 or outside of the extruder 3, from within the barrel 4 towards the die 10.

Optionally, a breaker plate 9 is mounted upstream of the die 10 and downstream of the barrel 4.

Through at least an orifice 11 (see figure 2) practised on a lateral surface of the die 10, a cross-linking agent is added into the mixture at a point of the die where the final desired shape has been acquired to initiate cross-linking of the thermoset resin within the die 10. Then, optionally the mixture is moved through the extender element 8 and it is kept there during a residence time enough to allow the mixture to cross-link to a sufficient extent to avoid the crumbling of the resulting piece/profile when exiting the extender element. Depending on the granulated vulcanised rubber and the thermoset resin used, the skilled person knows or can easily find the required residence time of the mixture within the die and optionally the extender element to allow the object to cross-link to a sufficient extent to avoid the crumbling of the piece so obtained. It is important to take into account that while the mixture is cross-linking is also moving through the die and optionally the extender element, so that a substantially finished piece is obtained without requiring a further demoulding processing.

When the cross-linking agent is added at this stage, cross-linking of the thermoset resin 2 take place within the die 10 and not at a too much earlier stage nor a too much later stage.

Finally, the mixture is moved through the die 10 to obtain an extruded profile with the desired shape and then, if present, is forced through the extender element 8, which is mounted downstream of the die 10.

Preferably, the cross-linking agent is added into the mixture through at least a set of circumferentially distributed orifices around the perimeter of the die (10). However, there also exists the possibility of introducing the cross-linking agent in the mixture through two or more sets of circumferentially distributed orifices around the perimeter of the die (see Figure 2) one of them located upstream of the die (10) and the other one downstream of the same. In this embodiment, the cross-linking agent is added into the mixture at two different cross-linking stages of the thermoset resin, an initial cross-linking stage and an intermediate cross-linking stage. This improves control of the cross-linking of the thermoset resin.

Optionally, the die 10 comprises a mandrel 12 so as to allow the profile of granulated vulcanised rubber with the thermoset resin 2 obtained by forcing the mixture to exit through de die 10, to have a tubular form.

In preferred embodiments, the thermoset resin is a isocyanate and the cross-linking agent is water or glycol, more preferably water. In the latter case, water can be introduced in the die in liquid form, in which case is quickly is converted into steam due to the high die's temperature or can be introduced directly in steam form.

When isocyanate is chosen as the thermoset resin and water as the cross-linking agent, it is advantageous that the mixture contains 80-91 wt % of the granulated vulcanised rubber and 9-20 wt % of isocyanate. Also, preferably, the ratio isocyanate/granulated vulcanised rubber ranges from 10-25% and the ratio water/isocyanate from 36-75%.

Extremely low amounts of thermoset resin (isocyanate) can promote crumbling of the extruded profile since the particles of the granulated vulcanised rubber can become only partially covered in the thermoset resin before its cross-linking, while extremely high amounts of thermoset resin can result in a extremely tough profile for its subsequent processing.

On the other hand, extremely low amounts of cross-linking agent (water) require long residence times in the extender element in order to guarantee the enough cross-linking of the isocyanate, while extremely high amounts of water introduced in the mixture can result in a cooling of the same and so in a delay in the cross-linking of the resin.

In order to reduce production times, the mixture within the die 10 may be heated up by heating means (not represented) at least partially surrounding the die 10. Preferably but not necessarily, the mixture within the die 10 is heated up to a temperature comprised preferably between 80 - 160 °C, more preferably between 100 °C and 150 °C, and most preferably between 120 °C and 140 °C. In preferred embodiments, the grain size of the granulated vulcanised rubber is between 0.1 and 7 mm, more preferably between 0.1 and 5 mm, and most preferably between 0.8 and 4 mm. The wt% of the granulated vulcanised rubber in the mixture is preferably between 78 and 96%, more preferably between 80 and 91%, and most preferably between 85 and 89%. On its side, the wt% of the thermoset resin in the mixture is preferably between 4 and 25%, more preferably between 9 and 20%, and most preferably between 11 and 15%. Finally, the cross-linking agent is added to the mixture at a ratio cross-linking agent/resin of preferably between 35 and 150%, more preferably between 40 and 75%, and most preferably between 40 and 50%.

### EXAMPLES

### Comparative Example

A single screw extruder comprising a barrel 4, a screw 7 and a die 10 was used according to a process known in the prior art, to try to obtain extruded profiles wherein the granulated vulcanised rubber 1, the thermoset resin 2 and the cross-linking agent are introduced altogether through the feed throat 5 of the barrel 4.

In a first example, the screw 7 mixed the granulated vulcanised rubber 1, the thermoset resin 2 and the cross-linking agent to form a three-component mixture and advanced the three-component mixture from within the barrel 4 towards the die 10. Finally, the three-component mixture was forced through the die 10.

Two samples were tested in such a manner, wherein the nominal grain size of the granulated vulcanised rubber 1 was comprised between 0.8-2 mm, isocyanate was selected as the thermoset resin 2 and liquid water was selected as the cross-linking agent.

Sample A contained 90.5 wt% of the granulated vulcanised rubber 1, 9.5 wt% of isocyanate, that is, the ratio of isocyanate to granulated vulcanised rubber 1 was 10.5%. The amount of liquid water added to the mixture, expressed as a ratio of water to isocyanate was 1.1%.

Sample B contained 75.9 wt% of the granulated vulcanised rubber 1, 24.1 wt% of isocyanate, that is, the ratio of isocyanate to granulated vulcanised rubber 1 was 31.7%. The amount of liquid water added to the mixture, expressed as a ratio of water to isocyanate was 3.3%.

The composition of both samples is summarised in the following table.

| | Granulated vulcanised rubber (GVR) | | Isocyanate (ThR) | ThR/GVR | H₂O/ThR |
|---|---|---|---|---|---|
| | Nominal grain size [mm] | [wt%] | [wt%] | [% (wt/wt)] | [% (wt/wt)] |
| Sample A | 100% - {0.8 - 2} | 90.5 | 9.5 | 10.5 | 1.1 |
| Sample B | 100% - {0.8 - 2} | 75.9 | 24.1 | 31.7 | 3.3 |

The three-component mixture's temperature was measured at five locations by means of thermocouples located as follows: upstream of the barrel 4 (T₁), midstream of the barrel 4 (T₂), downstream of the barrel 4 (T₃), midstream of the die 10 (T₄) and downstream of the die 10 (T₅). The thermocouples located on the die 10 have been depicted in figure 2 as a first and a second thermocouple 13', 13".

The readings at these locations are summarised in the following table.

| | T₁[°C] | T₂[°C] | T₃[°C] | T₄[°C] | T₅[°C] |
|---|---|---|---|---|---|
| Sample A | 30 | 85 | 140 | 140 | 140 |
| Sample B | 30 | 100 | 160 | 160 | 160 |

Both samples resulted in an outcoming profile that crumbled apart as soon as it exited the die 10, which is considered to be caused by early cross-linking of the isocyanate within the barrel 4.

### Example 1

In this example, the die 10 employed in the prior testing was substituted for another die 10 with three orifices 11 practised on its lateral surface. The die was not provided with extender element.

On this occasion, the granulated vulcanised rubber 1 and the thermoset resin 2 were introduced through the feed throat 5 of the barrel 4, whereas the cross-linking agent was introduced through three orifices practised on the lateral surface of the die 10.

The screw 7 mixed the granulated vulcanised rubber 1 and the thermoset resin 2 to form a mixture and advanced the mixture from within the barrel 4 towards the die 10.

The cross-linking agent was added into the mixture through the orifice 11 practised on the lateral surface of the die 10. Finally, the mixture was moved through the die 10 acquiring its final shape.

Two samples were tested in such a manner, wherein isocyanate was selected as the thermoset resin 2 and liquid water was selected as the cross-linking agent.

The nominal grain size the granulated vulcanised rubber 1 in sample C was 50% comprised between 2 - 4 mm, 25% comprised between 0.8 - 2 mm and 25% comprised between 0.2 - 0.8 mm.

Sample C contained 74.6 wt% of the granulated vulcanised rubber 1 and 25.4 wt% of isocyanate, that is, the ratio of isocyanate to granulated vulcanised rubber 1 was 34.0%. The amount of liquid water added to the mixture, expressed as a ratio of liquid water to isocyanate, was 0.04%.

The nominal grain size the granulated vulcanised rubber 1 in sample D was 50% comprised between 2-4 mm and 50% comprised between 0.8 - 2 mm. Sample D contained 83.1 wt% of the granulated vulcanised rubber 1 and 16.9 wt% of isocyanate, that is, the ratio of isocyanate to granulated vulcanised rubber 1 was 20.3%. The amount of liquid water added to the mixture, expressed as a ratio of liquid water to isocyanate, was 0.06%.

The nominal grain size of the granulated vulcanised rubber 1 and the composition of both samples are summarised in the following table.

| | Granulated vulcanised rubber (GVR) | | Isocyanate (ThR) | ThR/GVR | H₂O/ThR |
|---|---|---|---|---|---|
| | Nominal grain size [mm] | [wt%] | [wt%] | [% (wt/wt)] | [% (wt/wt)] |
| Sample C | 50% - {2 - 4} | 74.6 | 25.4 | 34.0 | 0.04 |
| | 25% - {0.8 - 2} | | | | |
| | 25% - {0.2 - 0.8} | | | | |
| Sample D | 50% - {2 - 4} | 83.1 | 16.9 | 20.3 | 0.06 |
| | 50% - {0.8 - 2} | | | | |

The mixture's temperature was measured only at the midstream and the downstream of the die 10 employing the first and second thermocouples 13', 13". The readings are summarised in the following table.

| | T₄ [°C] | T₅ [°C] |
|---|---|---|
| Sample C | 120 | 120 |
| Sample D | 120 | 120 |

Both samples resulted in an outcoming profile that crumbled apart as soon as it exited the die 10 caused by insufficient cross-linking of the isocyanate within the die 10. The extremely low quantity of water added to the mixture resulted in a extremely high cross-linking time which resulted in the resin being unable to cross-link within the die 10 to a sufficient extent to avoid crumbling of the mixture when exiting the die.

### Example 2

In view of the above testing, nine different samples were prepared and tested following the process explained for samples C and D. For these samples isocyanate was selected as the thermoset resin 2 and liquid water was selected as the cross-linking agent. In this example, the die was not provided with extender element.

The nominal grain size of the granulated vulcanised rubber 1 and the composition of these samples are summarised in the following table.

| | Granulated vulcanised rubber (GVR) | | Isocyanate (ThR) | ThR/GVR | H₂O/ThR |
|---|---|---|---|---|---|
| | Nominal grain size [mm] | [wt%] | [wt%] | [% (wt/wt)] | [% (wt/wt)] |
| Sample E | 50% - {2 - 4} | 80.0 | 20.0 | 25.0 | 51.9 |
| | 50% - {0.8 - 2} | | | | |
| Sample F | 50% - {2 - 4} | 80.0 | 20.0 | 25.0 | 40.0 |
| | 50% - {0.8 - 2} | | | | |
| Sample G | 50% - {2 - 4} | 80.0 | 20.0 | 25.0 | 40.0 |
| | 50% - {0.2 - 0.8} | | | | |
| Sample H | 55% - {2 - 4} | 83.3 | 16.7 | 20.0 | 50.0 |
| | 30% - {0.8 - 2} | | | | |
| | 15% - {0.2 - 0.8} | | | | |
| Sample I | 80% - {2 - 4} | 84.8 | 15.2 | 18.0 | 36.8 |
| | 20% - {0.8 - 2} | | | | |
| Sample J | 80% - {2 - 4} | 87.0 | 13.0 | 15.0 | 44.7 |
| | 20% - {0.8 - 2} | | | | |
| Sample K | 80% - {2 - 4} | 90.9 | 9.1 | 10.0 | 49.4 |
| | 20% - {0.8 - 2} | | | | |
| Sample L | 80% - {2 - 4} | 89.3 | 10.7 | 12.0 | 74.7 |
| | 20% - {0.8 - 2} | | | | |
| Sample M | 100% - {2 - 4} | 90.9 | 9.1 | 10.0 | 49.4 |

The mixture's temperature was measured at the midstream and the downstream of the die 10 employing the first and second thermocouples 13', 13". Samples I, J and K were only measured at the downstream of the die 10 with the second thermocouple 13". The readings are summarised in the following table.

| | T₄ [°C] | T₅ [°C] |
|---|---|---|
| Sample E | 140 | 140 |
| Sample F | 110 | 140 |
| Sample G | 110 | 140 |
| Sample H | 110 | 140 |
| Sample I | - | 140 |
| Sample J | - | 140 |
| Sample K | - | 140 |
| Sample L | 80 | 140 |
| Sample M | 80 | 140 |

Samples E through I and L resulted in a high consistency granulated vulcanised rubber profile with isocyanate, whereas samples J, K and M resulted in a spongy granulated vulcanised rubber profile bonded by isocyanate.

The properties of the profiles obtained in samples through E to I and sample L are in accordance with those of the samples manufactured by moulding, but with the difference that these have been obtained much more quickly. This is a proof of the viability of the process for obtaining solid finished products with satisfactory physical properties.

### Example 3

In the light of the previous examples, a new sample was prepared and tested following the process described for samples C and D. For these samples, isocyanate was selected as the thermoset resin 2 and liquid water as the cross-linking agent. The die was provided with an extender element which had a length of 50 cm and the residence time within the extender element was 5 minutes. The nominal size of the granulated vulcanised rubber particle 1 and the composition of these samples is summarised in the Table below

| | Granulated vulcanised rubber (GVR) | | Isocianato (ThR) | ThR/GVR | H₂O/ThR |
|---|---|---|---|---|---|
| | Nominal grain size [mm] | [wt %] | [wt %] | [% (wt/wt)]] | [% (wt/wt)] |
| Sample N | 100% - {2 - 4} | 89.0 | 11.0 | 12,0 | 150.0 |

In this case, the time required for manufacturing one linear meter of product was between 3 - 5 minutes, which can be compared in a very favourable way with times required in the processes of the prior art.

The consistency of the profile obtained from the sample N was good, and it showed similar properties to those as that obtained by moulding.

## Claims

1. Continuous process for manufacturing a solid object by extruding a granulated vulcanised rubber (1) with a thermoset resin (2) in an extruder (3) which comprises a die (10) having at least one orifice (11, 11', 11") practised on a lateral surface thereof, the process comprising the steps of:
- mixing the granulated vulcanised rubber (1) and the thermoset resin (2) to form a mixture and moving this mixture towards the die (10);
- while the mixture is moving through the die (10), adding a fluid cross-linking agent to the mixture through the at least one orifice (11, 11', 11") practised on a lateral surface of the die (10), at a point of the die where the mixture has acquired the desired shape and in a sufficient amount to start the cross-linking of the resin within the die (10), thereby acquiring its final shape; and
- keeping the mixture with its final shape moving through the die (10) during a time period long enough to allow the resulting object to cross-link to a sufficient extent to avoid its crumbling and to allow to obtain a substantially finished piece when exiting the extruder (3).

2. Process according to claim 1, wherein the die (10) of the extruder is provided with an extender element (8) thereof, and the mixture, once it has gone through the die (10), is moved through the extender element (8) during the time required for the resulting object to cross-link enough to avoid the crumbling of the same when exiting the extruder.

3. Process according to claims 1 or 2, wherein the thermoset resin (2) is isocyanate and the cross-linking agent is water.

4. Process according to any one of claims 1 to 3, wherein a fluidizing agent or release agent is added to the mix.

5. Process according to any one of the preceding claims, wherein the residence time of the vulcanised rubber (1), thermoset resin (2) and cross-linking agent mixture in the die (10) and optionally in the extender element (8) ranges from 5 to 10 minutes.

6. Process according to any one of the preceding claims, wherein the granulated vulcanised rubber has a grain size between 0.1 and 7 mm.

7. Process according to claim 6, wherein the granulated vulcanised rubber has a grain size between 0.8 and 4 mm.

8. Process according to any one of the preceding claims, wherein the mixture of vulcanised rubber (1) and thermoset resin (2) comprises between 78-96 wt% granulated vulcanised rubber and 4 - 25 wt% thermoset resin, and the ratio water/thermoset resin is between 35 and 150%.

9. Process according to claim 8, wherein the mixture of vulcanised rubber (1) and thermoset resin (2) comprises between 85-89 wt% granulated vulcanised rubber and 11-15 wt% thermoset resin, and the ratio water/thermoset resin is between 40 and 50%.

10. Process according to any one of the preceding claims, wherein the mixture within the die (10) is heated to temperature between 80 and 160 °C.

11. Process according to any one of the preceding claims, wherein the orifices (11, 11', 11") practised on the lateral surface of the die (10), and which are intended to add a fluid cross-linking agent to the mix, are located in at least one set of circumferentially distributed orifices around the perimeter of the die (10).

12. Process according to claim 11, wherein the orifices (11, 11', 11") practised on the lateral surface of the die (10), and which are intended to add a fluid cross-linking agent to the mix, are located in two or more sets of circumferentially distributed orifices around the perimeter of the die (10).

13. Process according to any one of the preceding claims, wherein the granulated vulcanised rubber (1) and the thermoset resin (2) are provided separately to the barrel (4) of the extruder (3) through the feed throat (5), and are then mixed within the barrel (4) by a screw (7) which also force the mixture to the die (10).

14. Process according to any one of the preceding claims, wherein the extruder (3) further comprises a breaker plate (9) mounted downstream of the barrel (4) and upstream of the die (10) so that the mixture advances from within the barrel (4) towards the die (10) through the breaker plate (9).

15. Process according to any one of the preceding claims, wherein the granulated vulcanised rubber proceeds from scrap tyres.

## Patentansprüche

1. Kontinuierlicher Prozess zum Fertigen eines festen Objekts durch Extrudieren eines granulierten vulkanisierten Gummis (1) mit einem Duroplast (2) in einem Extruder (3), der eine Düse (10) mit zumindest einer Öffnung (11, 11', 11"), die an einer Seitenfläche davon ausgeführt ist, umfasst, wobei der Prozess die folgenden Schritte umfasst:
- Mischen des granulierten vulkanisierten Gummis (1) und des Duroplasts (2) zum Bilden eines Gemischs und Bewegen dieses Gemischs in Richtung der Düse (10);
- Hinzufügen, während sich das Gemisch durch die Düse (10) bewegt, eines fließfähigen Vernetzungsmittels zum Gemisch durch die zumindest eine auf einer Seitenfläche der Düse (10) ausgeführte Öffnung (11, 11', 11") an einem Punkt der Düse, wo das Gemisch die gewünschte Form erhalten hat, und in einer Menge, die ausreichend ist, um das Vernetzen des Duroplasts innerhalb der Düse (10) zu starten, dabei seine endgültige Form erhaltend; und
- Fortführen des Bewegens des Gemischs mit seiner endgültigen Form durch die Düse (10) während einer Zeitspanne, die lang genug ist, um dem resultierenden Objekt zu ermöglichen, in einem ausreichenden Ausmaß zu vernetzen, um sein Zerfallen zu verhindern und zu ermöglichen, ein im Wesentlichen fertiges Stück zu erhalten, wenn dieses den Extruder (3) verlässt.

2. Prozess nach Anspruch 1, wobei die Düse (10) des Extruders mit einem Verlängerungselement (8) davon versehen ist, und wobei das Gemisch, nachdem es die Düse (10) durchlaufen hat, durch das Verlängerungselement (8) bewegt wird, während der Zeit, die erforderlich ist, damit das resultierende Objekt ausreichend vernetzt wird, um ein Zerfallen desselben beim Verlassen des Extruders zu verhindern.

3. Prozess nach Ansprüchen 1 oder 2, wobei der Duroplast (2) Isocyanat ist und das Vernetzungsmittel Wasser ist.

4. Prozess nach einem der Ansprüche 1 bis 3, wobei dem Gemisch ein Fluidisierungsmittel oder Trennmittel hinzugefügt wird.

5. Prozess nach einem der vorhergehenden Ansprüche, wobei die Verweilzeit des Gemischs aus vulkanisiertem Gummi (1), Duroplast (2) und Vernetzungsmittel in der Düse (10) und optional im Verlängerungselement (8) von 5 bis 10 Minuten reicht.

6. Prozess nach einem der vorhergehenden Ansprüche, wobei der granulierte vulkanisierte Gummi eine Korngröße zwischen 0,1 und 7 mm hat.

7. Prozess nach Anspruch 6, wobei der granulierte vulkanisierte Gummi eine Korngröße zwischen 0,8 und 4 mm hat.

8. Prozess nach einem der vorhergehenden Ansprüche, wobei das Gemisch aus vulkanisiertem Gummi (1) und Duroplast (2) zwischen 78 - 96 Gew.-% granulierten vulkanisierten Gummi und 4 - 25 Gew.-% Duroplast umfasst und das Wasser/Duroplast-Verhältnis zwischen 35 und 150 % liegt.

9. Prozess nach Anspruch 8, wobei das Gemisch aus vulkanisiertem Gummi (1) und Duroplast (2) zwischen 85 - 89 Gew.-% granulierten vulkanisierten Gummi und 11 - 15 Gew.-% Duroplast umfasst und das Wasser/Duroplast-Verhältnis zwischen 40 und 50 % liegt.

10. Prozess nach einem der vorhergehenden Ansprüche, wobei das Gemisch im Inneren der Düse (10) auf eine Temperatur zwischen 80 und 160 °C erwärmt wird.

11. Prozess nach einem der vorhergehenden Ansprüche, wobei die Öffnungen (11, 11', 11"), die auf der Seitenfläche der Düse (10) ausgeführt sind und die dazu bestimmt sind, dem Gemisch ein fließfähiges Vernetzungsmittel hinzuzufügen, in zumindest einer Menge von auf dem Umfang der Düse (10) umlaufend verteilten Öffnungen befindlich sind.

12. Prozess nach Anspruch 11, wobei die Öffnungen (11, 11', 11"), die auf der Seitenfläche der Düse (10) ausgeführt sind und die dazu bestimmt sind, dem Gemisch ein fließfähiges Vernetzungsmittel hinzuzufügen, in zwei oder mehreren Mengen von auf dem Umfang der Düse (10) umlaufend verteilten Öffnungen befindlich sind.

13. Prozess nach einem der vorhergehenden Ansprüche, wobei der granulierte vulkanisierte Gummi (1) und der Duroplast (2) der Trommel (4) des Extruders (3) separat durch den Einfüllschacht (5) zugeführt werden und dann innerhalb der Trommel (4) durch eine Schraube (7) gemischt werden, die außerdem das Gemisch zur Düse (10) drückt.

14. Prozess nach einem der vorhergehenden Ansprüche, wobei der Extruder (3) ferner eine Stauscheibe (9) umfasst, die nachgelagert der Trommel (4) und vorgelagert der Düse (10) montiert ist, sodass das Gemisch von innerhalb der Trommel (4) in Richtung der Düse (10) die Stauscheibe (9) durchläuft.

15. Prozess nach einem der vorhergehenden Ansprüche, wobei der granulierte vulkanisierte Gummi von Altreifen stammt.

## Revendications

1. Procédé continu pour fabriquer un objet solide en extrudant un caoutchouc granulé vulcanisé (1) avec une résine thermodurcissable (2) dans une extrudeuse (3) qui comprend une filière (10) possédant au moins un orifice (11, 11', 11") réalisé sur une surface latérale de cette dernière, le procédé comprenant les étapes consistant à :
- mélanger le caoutchouc granulé vulcanisé (1) et la résine thermodurcissable (2) pour former un mélange et faire se déplacer ce mélange en direction de la filière (10) ;
- tandis que le mélange se déplace dans la filière (10), ajouter un agent de réticulation fluide au mélange par le au moins un orifice (11, 11', 11") réalisé sur une surface latérale de la filière (10), en un point de la filière où le mélange a acquis la forme désirée et en quantité suffisante pour démarrer la réticulation de la résine à l'intérieur de la filière (10), en lui faisant acquérir ainsi sa forme finale ; et
- continuer à faire se déplacer le mélange avec sa forme finale dans la filière (10) durant une période de temps suffisamment longue pour permettre à l'objet produit d'être réticulé de manière suffisante afin d'éviter son émiettement et pour permettre l'obtention d'une pièce substantiellement finie lorsqu'elle sort de l'extrudeuse (3).

2. Procédé selon la revendication 1, dans lequel la filière (10) de l'extrudeuse est munie d'un élément d'extension (8) de cette dernière, et le mélange, une fois passé dans la filière (10), est déplacé dans l'élément d'extension (8) durant le temps requis pour que l'objet produit soit suffisamment réticulé afin d'éviter l'émiettement de ce dernier lorsqu'il sort de l'extrudeuse.

3. Procédé selon les revendications 1 ou 2, dans lequel la résine thermodurcissable (2) est de l'isocyanate et l'agent de réticulation est de l'eau.

4. Procédé selon l'une quelconque des revendications 1 à 3, dans lequel un agent fluidifiant ou un agent de démoulage est ajouté au mélange.

5. Procédé selon l'une quelconque des revendications précédentes, dans lequel le temps de résidence du mélange de caoutchouc vulcanisé (1), résine thermodurcissable (2) et agent de réticulation dans la filière (10) et éventuellement dans l'élément d'extension (8) est de 5 à 10 minutes.

6. Procédé selon l'une quelconque des revendications précédentes, dans lequel la grosseur de grain du caoutchouc granulé vulcanisé est comprise entre 0,1 et 7 mm.

7. Procédé selon la revendication 6, dans lequel la grosseur de grain du caoutchouc granulé vulcanisé est comprise entre 0,8 et 4 mm.

8. Procédé selon l'une quelconque des revendications précédentes, dans lequel le mélange de caoutchouc vulcanisé (1) et de résine thermodurcissable (2) est constitué de 78 à 96% en poids de caoutchouc granulé vulcanisé et de 4 à 25% en poids de résine thermodurcissable, et le rapport eau/résine thermodurcissable est compris entre 35 et 150%.

9. Procédé selon la revendication 8, dans lequel le mélange de caoutchouc vulcanisé (1) et de résine thermodurcissable (2) est constitué de 85 à 89% en poids de caoutchouc granulé vulcanisé et de 11 à 15% en poids de résine thermodurcissable, et le rapport eau/résine thermodurcissable est compris entre 40 et 50%.

10. Procédé selon l'une quelconque des revendications précédentes, dans lequel le mélange à l'intérieur de la filière (10) est chauffé à une température comprise entre 80 et 160°C.

11. Procédé selon l'une quelconque des revendications précédentes, dans lequel les orifices (11, 11', 11") réalisés sur la surface latérale de la filière (10), et qui sont destinés à permettre l'ajout d'un agent de réticulation fluide au mélange, sont situés dans au moins un ensemble d'orifices répartis de façon circonférentielle autour du périmètre de la filière (10).

12. Procédé selon la revendication 11, dans lequel les orifices (11, 11', 11") réalisés sur la surface latérale de la filière (10), et qui sont destinés à permettre l'ajout d'un agent de réticulation fluide au mélange, sont situés dans deux ou plusieurs ensembles d'orifices répartis de façon circonférentielle autour du périmètre de la filière (10).

13. Procédé selon l'une quelconque des revendications précédentes, dans lequel le caoutchouc granulé vulcanisé (1) et la résine thermodurcissable (2) sont fournis séparément au canon (4) de l'extrudeuse (3) via la gorge d'alimentation (5), et sont ensuite mélangés à l'intérieur du canon (4) par une vis (7) qui pousse aussi le mélange vers la filière (10).

14. Procédé selon l'une quelconque des revendications précédentes, dans lequel l'extrudeuse (3) comprend en outre une grille (9) montée en aval du canon (4) et en amont de la filière (10) pour que le mélange avance depuis l'intérieur du canon (4) en direction de la filière (10) à travers la grille (9).

15. Procédé selon l'une quelconque des revendications précédentes, dans lequel le caoutchouc granulé vulcanisé provient de pneus usagés.
